Europäisches Patentamt

European Patent Office

Office européen des brevets

(11) Numéro de publication: **0 334 781**
**A1**

## (12) DEMANDE DE BREVET EUROPEEN

(21) Numéro de dépôt: **89460006.3**

(22) Date de dépôt: **21.02.89**

(51) Int. Cl.⁴: **A 43 B 13/12**
**A 43 B 13/18**

(30) Priorité: **22.03.88 FR 8804054**

(43) Date de publication de la demande:
**27.09.89 Bulletin 89/39**

(84) Etats contractants désignés: **BE DE ES GB IT**

(71) Demandeur: **Beneteau, Charles-Marie**
**Les Bourochelles**
**F-85700 Pouzauges (FR)**

(72) Inventeur: **Beneteau, Charles-Marie**
**Les Bourochelles**
**F-85700 Pouzauges (FR)**

(54) **Semelle de chaussures pour la pratique des sports et activités analogues.**

(57) Semelle de chaussures, notamment pour la pratique des sports et activités de plein air constituée par la superposition d'un matériau expansé léger (16) à un matériau compact dense (17), comportant des protubérances fermes (11) et des protubérances souples compressibles (15).

L'ensemble assure, quel que soit l'état des terrains, un ancrage au sol efficace et un appui dynamique.

FIG. II

EP 0 334 781 A1

**Description**

## SEMELLE DE CHAUSSURES POUR LA PRATIQUE DES SPORTS ET ACTIVITES ANALOGUES.

L'invention a pour objet une semelle de chaussures pour la pratique des sports et activités analogues.

Elle concerne plus particulièrement les activités dites de plein air, pratiquées sur des terrains naturels ou améliorés, par exemple le Football, le Rugby, l'Athlétisme, le Baseball, le Cricket, le Cross, l'Orientation pratiquée dans les pays nordiques etc ...

Toute activité sportive de ce genre est faite de courses, de bonds, de démarrages, d'arrêts, d'esquives, d'efforts violents et répétés dans des positions variées, sur des terrains de qualités inégales, d'où la nécessité de chaussures spéciales, surtout par leur semelle qui doit satisfaire au mieux à trois exigences prioritaires :
- un ancrage au sol efficace pour éviter toute glissade,
- un appui au sol maximal pour absorber les chocs et restituer l'énergie emmagasinée à l'impact,
- la plus grande légèreté pour éviter toute charge inutile et la fatigue qui en résulte.

Le problème de l'Ancrage au sol, le plus évident, a été résolu dès l'origine par la création de protubérances sous la semelle, appelées communément crampons, barrettes, pointes etc... dont les formes, la taille, la disposition sont variées. Ces protubérances , de préférence peu nombreuses pour être efficaces, sont, ainsi que la semelle qui les supporte, très sollicitées et doivent par conséquent être particulièrement résistantes à l'abrasion, au cisaillement et à la déchirure, donc massives et peu légères.

Ce système, efficace dans les terrains gras, présente des inconvénients importants dans les terrains souples et secs, états qui découlent non seulement du temps et des saisons mais aussi des progrès réalisés dans les techniques modernes de construction des terrains qui rendent ceux-ci moins sensibles aux variations climatiques. Dans ces cas de plus en plus nombreux, les protubérances entrainent un appui au sol insuffisant, inégal, avec l'apparition de points durs sous la plante du pied, l'absorption des chocs et la restitution d'énergie devenant nulles, d'où inconfort, fatigue et accidents musculaires.

L'invention vise donc la réalisation d'une semelle légère, conciliant un ancrage efficace et un appui maximal, obtenant l'effet d'une semelle avec protubérances sur le plan de l'ancrage, et l'effet d'une semelle sans protubérance sur le plan de l'appui au sol, donc du confort, avec absorption des chocs et restitution d'énergie optimales quel que soit l'état du terrain.

La semelle selon l'invention est caractérisée par le fait qu'elle comporte deux sortes de protubérances : des protubérances fermes, rigides, en quelque sorte classiques, complétées et épaulées par des protubérances souples, par préférence de même hauteur, aisément compressibles et déformables, grâce à leur dessin particulier et à la nature du matériau qui les compose, et susceptibles, par conséquence , de s'effacer par rapport aux protubérances fermes, en se comprimant selon les pressions s'exerçant à leur endroit.

Le corps de la semelle proprement dit, et les protubérances qui le prolongent sont, par conséquent, composés d'au moins deux produits, compatibles entre eux, l'un dense, ferme et compact, l'autre expansé donc léger.

Le produit compact, plus résistant à l'abrasion, à la rupture et au cisaillement, est réservé aux zones périphériques, les plus sollicitées , avec des épaisseurs variables, juste suffisantes pour le rôle à assumer : zones d'abrasion , de liaisons, de maintien d'inserts métalliques ou autres , et protubérances fermes.

Il est supprimé là où il est inutile , notamment au centre de la semelle.

Le produit expansé, léger, constitue la plus grande part de la semelle. Il assure d'abord la liaison avec la tige, constituant un coussin confortable courant sous toute la surface du pied, lequel compense les différences d'épaisseur des zones compactes et amortit les points de pression qui s'exercent notamment à la verticale des protubérances fermes. Enfin, là où le produit compact a été supprimé, le produit expansé constitue l'épaisseur totale de la semelle, se terminant par les protubérances souples, cette construction réunissant les meilleures conditions de l'absorption des chocs et la restitution d'énergie, aux endroits les plus adéquats, c'est à dire au centre de l'avant pied et au centre du talon principalement.

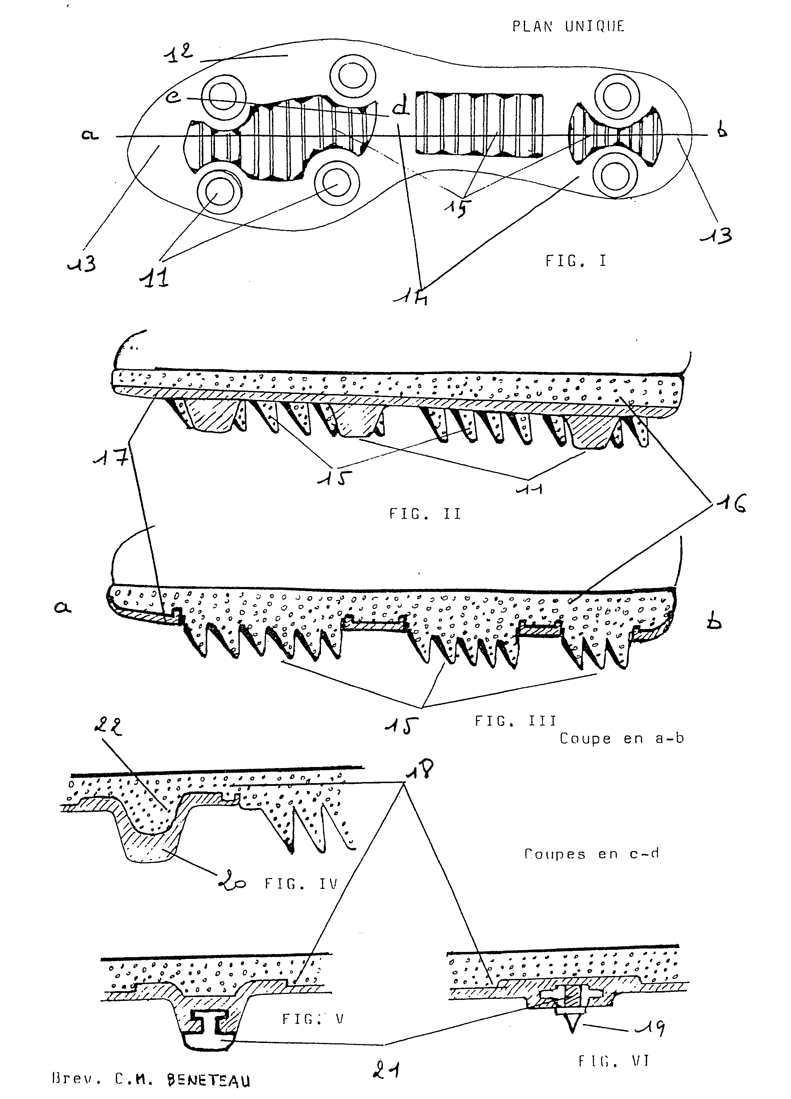

Dans la description qui suit, on se réfère aux dessins annexés , dans lesquels :
  - la figure I est une vue par dessous d'une semelle selon l'invention
  - la figure II est une vue de profil de la semelle de la figure I
  - la figure III est une vue en coupe suivant un axe longitudinal a-b de la semelle de la figure I ;
  - les figures IV,V et VI représentent, en coupe suivant c-d différents types de protubérances fermes, ainsi que l'agencement l'un par rapport à l'autre des deux matériaux superposés constituant la semelle selon l'invention.

La figure I selon une forme de réalisation préférentielle, montre la répartition des matériaux ferme et souple entre eux. Pour le matériau ferme : les protubérances fermes (11) , les zones périphériques (12) , les zones d'abrasion (13) , les zones de liaison (14) . Pour le materiau expansé : les protubérances souples (15) correspondant aux zones l'appui : centre de l'avant pied et centre du talon.

Suivant les figures II et III , la semelle selon l'invention est donc composée de deux couches superposées en materiaux compatibles, soit d'une part une couche supérieure légère en materiau expansé (16) dont l'épaisseur s'accroît en direction du talon et qui présente, en dessous , des protubérances souples (14) dans la partie centrale, longitudinale de la semelle aux endroits correspondant aux zones d'appui de l'avant du pied, de la voûte plantaire et du talon et d'autre part une couche inférieure (17) répartie dans les zones périphériques (12) , les zones d'abrasion (13) , et les zones de liaison (14) autour des protubérances souples (15) , cette couche inférieure étant constituée en materiau dense ferme et compact et présentant elle-même des protubérances fermes (11) situées à la périphérie de la semelle.

Dans les parties de la couche supérieure en materiau expansé autres que celles d'où émergent les protubérances souples, c'est à dire dans les parties de cette couche supérieure qui adhèrent à la couche inférieure, ladite couche supérieure épouse et compense les différences de relief (18) qui marquent la face interne de la couche inférieure et qui sont imposées par la nécessité d'augmenter l'épaisseur du materiau dense là où la couche inférieure est soumise à des contraintes particulières, notamment aux emplacements des protubérances fermes (11).

En revanche, à l'intérieur de la chaussure , la face externe de la couche supérieure en materiau expansé présente une surface lisse, uniforme et souple de nature à assurer le confort de la chaussure.

Les protubérances fermes sont de formes coniques (19) ou tronconiques (20) suivant les modèles de chaussures et le sport auxquelles elles sont adaptées.

Ces protubérances fermes, soit sont constituées du seul materiau dense, ferme et compact dont est faite la couche inférieure de la semelle , soit comportent des inserts métalliques ou autres (21).

Lorsque les protubérances fermes ne comportent pas d'inserts, elles sont évidées de l'intérieur et les cavités ainsi réalisées (22) sont compensées par le materiau expansé constituant la couche supérieure de la semelle de manière à gagner en légèreté.

Selon une forme de réalisation préférentielle, les protubérances souples (15) sont de hauteur égale à celle des protubérances fermes (11).

Selon une variante , les protubérances souples (15) peuvent être de hauteur différente de celle des protubérances fermes (11).

Les protubérances souples (15) sont en forme de replis dentelés. Selon plusieurs variantes, elles peuvent également être réalisées en forme de dents , de pics ou de modules.

Dans la pratique, la semelle selon l'invention sera sollicitée de différentes façons selon les terrains :
- en terrain très mou, les protubérances fermes pénètrent sans effort, les protubérances souples également, de sorte que la fonction d'appui de ces dernières sera moins importante que le supplément d'ancrage apporté par leur dessin agressif et leur forme anti-dérapante;
- en terrain souple , idéal pour l'activité sportive, il y a complémentarité parfaite et équilibrée entre l'ancrage et l'appui, toutes les fonctions et possibilités de la semelle étant également sollicitées ;
- en terrain sec et dur, la fonction d'appui des protubérances souples sera prépondérante, avec absorption des chocs et restitution d'énergie maximales. L'appui des protubérances souples limitera également la déformation transversale de la semelle par creusement de sa partie centrale, suspendue entre des protubérances fermes périphériques qui ne peuvent pénétrer dans le sol trop dur

La semelle selon l'invention apporte les solutions aux problèmes posées par l'exercice des activités sportives sur terrains variés : légèreté, élasticité, ancrage, absorption des chocs et restitution d'énergie.

La réalisation de l'invention sera avantageusement pratiquée par le moulage préalable de la partie de semelle compacte, incluant selon les choix tous inserts, métalliques ou autres, et réalisée par exemple en caoutchouc haute résistance, ou en polyuréthane compact ou assimilés, surmoulée ensuite en même temps que la tige de la chaussure, par injection de polyuréthane expansé par exemple, dont la densité peut être inférieure de moitié à la densité du matériau compact tout en conservant d'exceptionnelles qualités de liaison, d'élasticité et de résistance à la déchirure. La réalisation peut également se faire en une seule opération , par deux injections simultanées sur une machine à deux têtes d'injection.

En variant les couleurs des materiaux , on obtiendra des semelles bicolores, en dessous et sur les côtés. En augmentant ou en diminuant la densité du materiau expansé, on obtiendra avec la même moule des articles plus spécialement destinés à des contrées sèches ou humides.

## Revendications

1) Semelle de chaussures pour la pratique des activités sportives et de plein air caractérisée en ce qu'elle comporte deux couches superposées en matériaux compatibles, soit d'une part une couche supérieure légère en matériau expansé (16) qui présente, en dessous, des protubérances souples (15) dans la partie centrale longitudinale de la semelle aux endroits correspondant aux zones d'appui de l'avant du pied, de la voûte plantaire et du talon et d'autre part une couche inférieure (17) répartie dans les zones périphériques (12) ainsi que dans les zones d'abrasion (13) et de liaison (14) autour des protubérances souples (15) ; cette couche inférieure étant constituée en matériau dense, ferme et compact et présentant elle-même des protubérances fermes situées à la périphérie de la semelle (11).

2) Semelle de chaussures pour la pratique des activités sportives et de plein air selon la revendication I caractérisée en ce que la couche en matériau expansé a une épaisseur qui s'accroît en direction du talon.

3) Semelle de chaussures pour la pratique des activités sportives et de plein air selon l'une quelconque des revendications précédentes caractérisée en ce que la couche supérieure en matériau expansé épouse et compense les différences de relief (18) qui marquent la face interne de la couche inférieure en matériau dense et qui sont imposées par la nécessité d'augmenter l'épaisseur du matériau dense là où la couche inférieure est soumise à des contraintes particulières, notamment aux emplacements des protubérances fermes (11).

4) Semelle de chaussures pour la pratique des activités sportives et de plein air selon l'une quelconque des revendications précédentes caractérisée en ce que la face externe de la couche supérieure en matériau expansé présente une surface lisse, uniforme et souple.

5) Semelle de chaussures pour la pratique des activités sportives et de plein air selon l'une quelconque des revendications précédentes caractérisée en ce que les protubérances fermes, lorsqu'elles ne comportent pas d'inserts métalliques ou autres, sont évidées de l'intérieur, les cavités ainsi réalisées (22) étant compensées en matériau expansé de la couche supérieure de la semelle.

6) Semelle de chaussures pour la pratique des activités sportives et de plein air selon l'une quelconque des revendications précédentes caractérisée en ce que les protubérances souples (15) sont en forme de replis dentelés, de dents, de pieds ou de modules.

7) Semelle de chaussures pour la pratique des activités sportives et de plein air selon l'une quelconque des revendications précédentes caractérisée en ce que les protubérances souples (15) sont d'égale hauteur aux protubérances fermes (11).

Semelle de chaussures pour la pratique des activités sportives et de plein air selon l'une quelconque des revendications précédentes caractérisée en ce que les protubérances souples (15) sont de hauteur différente de celle des protubérances fermes (11).

PLAN UNIQUE

FIG. I

FIG. II

FIG. III
Coupe en a-b

FIG. IV

Coupes en c-d

FIG. V

FIG. VI

Brev. C.M. BENETEAU

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | US-A-4 667 423  (J. AUTRY) <br> --- | 1 | A 43 B   13/12 <br> A 43 B   13/18 |
| A | DE-A-2 733 605  (ADIDAS) <br> --- | 1 | |
| A | US-A-2 930 149  (N. HACK) <br> ----- | 1 | |

DOMAINES TECHNIQUES
RECHERCHES (Int. Cl.4)

A 43 B

**Le présent rapport a été établi pour toutes les revendications**

| Lieu de la recherche | Date d'achèvement de la recherche | Examinateur |
|---|---|---|
| LA HAYE | 19-05-1989 | DECLERCK J.T. |

EPO FORM 1503 03.82 (P0402)